# EUROPEAN PATENT SPECIFICATION

(11) **EP 1 694 179 B1**
(45) Date of publication and mention of the grant of the patent: **23.04.2008**
(21) Application number: 04799260.7
(22) Date of filing: 26.11.2004
(51) Int. Cl.: A47J 31/06

(54) **A BEVERAGE MAKING DEVICE**
GETRÄNKEHERSTELLUNGSVORRICHTUNG
DISPOSITIF POUR FABRIQUER UNE BOISSON

(30) Priority: 04.12.2003 EP 03257636
(43) Date of publication of application: 30.08.2006
(73) Proprietor: Koninklijke Philips Electronics N.V., 5621 BA Eindhoven (NL)
(72) Inventor: WOOD, Gemma, L., 5656 AA Eindhoven (NL); SNELL, Richard, A., 5656 AA Eindhoven (NL); BLATCHER, Stephen, 5656 AA Eindhoven (NL); HARRIS, David, S., 5656 AA Eindhoven (NL); ARLETT, Ben, 5656 AA Eindhoven (NL); KODDEN, Hans, 5656 AA Eindhoven (NL)
(74) Representative: Schouten, Marcus Maria
(86) International application number: PCT/IB2004/052571
(87) International publication number: WO 2005/053486

(56) References cited:
- EP-A- 0 838 186
- EP-A- 1 125 535
- WO-A-02/091889
- US-A- 5 372 832

## Description

The invention relates to a beverage making device comprising a brewing chamber for enclosing a pad containing a substance from which the beverage is to be brewed, which brewing chamber is formed by an upper part with one or more openings for supplying water to the brewing chamber, and by a lower part with an outflow opening through which the brewed beverage can leave the brewing chamber, while beverage receiving means are present below said lower part, whereby one or more further openings are present between the brewing chamber and the beverage receiving means. The expression 'pad' denotes any container holding a substance for brewing a beverage. It may be a disc-like container made of filtering paper enclosing the substance from which the beverage is to be brewed, but it may alternatively be any other container enclosing the required substance.

A device as described above is disclosed in WO-A-02/091889. This publication describes a device having a brewing chamber for containing ground coffee, but a coffee pad can also be placed in the brewing chamber.

WO-A-01/15582 discloses another prior art beverage making device comprising a water reservoir, means for heating the water to the required temperature, and means for pumping it to said holes in the upper part of the brewing chamber, so that the heated water can enter the brewing chamber under pressure. The brewing chamber contains a pad, also called a pouch, made of filter material and containing a substance to be extracted, for example ground coffee. The heated water will pass through the pad, so that the coffee is extracted. During the extraction process, the brewed beverage (coffee) leaves the brewing chamber through an outflow opening located in the center of the lower wall of the brewing chamber and arrives in beverage receiving means. The beverage receiving means comprise an outflow tube extending outside the device, so that the brewed beverage (coffee) can be caught by one or by two cups.

In the device, as disclosed in WO-A-01/15582, the portion of the device comprising the upper part of the brewing chamber can hinge upwards with respect to the stationary part of the device including the lower part of the brewing chamber, in order to give access to the brewing chamber. The pad can thus be removed and/or a new pad can be provided for a next brewing process. In the upward position of the hinging portion of the device, the lower part of the brewing chamber can be removed from the device, and said beverage receiving means can also be removed from the device. The lower part of the brewing chamber can be replaced by another similar part, which makes the brewing chamber larger, so that two pads can be placed in it, in order to brew enough beverage for two cups instead of one. The beverage receiving means can be removed in order to be cleaned, for example when a beverage other than the present one has to be brewed.

A beverage can be made in an extraction process by means of the device, for example to produce coffee, or in a dissolving process, for example to produce a chocolate drink. In the case of an extraction process, the extracted substance will remain in the pad, and the pad with the extracted substance must be removed from the brewing chamber after the brewing process. In the case of a dissolving process, the substance in the pad will disappear during the brewing process, and the empty pad must be removed. The pad may contain a rigid or an elastic internal framework to maintain the outside dimensions of the pad during the dissolving process.

It may be desired for various reasons to operate the device without a pad in the brewing chamber, in which case the heated water, supplied through said openings, is guided to the beverage receiving means without passing through a pad. The purpose of this operation may be, for example, cleaning of the device. It is also possible to make use of such an operation in order to brew a beverage by dissolving a substance which is present in the beverage receiving means. In general, more turbulence can be created in the beverage receiving means than in the brewing chamber, so that a better dissolving process can be achieved in the beverage receiving means. If, for example, a chocolate drink has to be brewed, the chocolate powder for the brewing process can be put in the beverage receiving means.

From time to time it is necessary to clean the different parts of the beverage making machine. Especially the brewing chamber and the beverage receiving means must be cleaned. Such means may comprise means for generating foam (froth) in that the beverage is injected into a frothing chamber, i.e. a beverage receiving chamber having a wall to which the jet of beverage is directed. The beverage is splashed in all directions in such a chamber, so that all walls will be contaminated.

To perform a cleaning operation, the lower part of the brewing chamber as well as the beverage receiving means can be removed from the device, for example, to rinse them under a water tap, or to wash them in a dishwasher. That is an effective way of cleaning in which all surfaces of the parts can be rinsed or washed. It is also possible to clean the device by simply initiating a brewing operation while the pad is not present in the brewing chamber. However, there is only a limited rinsing effect when such a cleaning operation is performed.

An object of the invention is to improve the effect of the cleaning operation of the beverage making device, during which the parts to be cleaned remain in the device.

To accomplish this objective, means are present for closing said one or more further openings during the brewing process. After the brewing process, a next process can be initiated in which no pad is present in the brewing chamber and said one or more further openings are open. As a result, the heated water will be pumped through the brewing chamber to the beverage receiving means, not only through the outflow opening, but also through the further openings. The heated water can thus be guided to all locations where contamination has taken place during the brewing process, resulting in an effective rinsing action. The waste water leaves the device in the same way as the brewed beverage, so that it can be caught in a cup or the like. If a dissolvable substance is present in the beverage receiving means, the turbulence caused by the simultaneous supply of water through more openings will improve the dissolving process.

The cleaning operation can be performed very easily at any moment between two brewing processes. If desired, the cleaning operation can be shorter or longer than the brewing process, because of the efficiency of it. Means may be present for performing the cleaning operation automatically after the brewing chamber has been closed without a pad inside.

In one preferred embodiment, said one or more further openings can be closed in that a portion of said lower part is pushed downward, said portion comprising at least a part of the lower wall of the brewing chamber, preferably the central part of the lower wall of the brewing chamber. Spring means may be present for counteracting said downward movement, i.e. for pushing said portion back in upward direction.

In one preferred embodiment, said portion of the lower part is pushed downward by the pad that is present in the brewing chamber. To achieve such a pushing action of the pad, the pad may be pressed down by the fluid pressure in the brewing chamber. The pad creates a resistance for the liquid flow through the brewing chamber, resulting in an increase in the fluid pressure above the pad. This pressure will push the pad downward, and therefore the pad will push said portion of said lower part downward.

Preferably, the pad is pushed in downward direction by the upper part of the brewing chamber when the chamber is closed. As a result, the pad can push against said portion of the lower part with the same force, thereby closing said one or more further openings between the brewing chamber and the beverage receiving means. After the brewing chamber has been opened to remove the pad, the pad will be lifted by said spring means, so that its removal is facilitated.

Preferably, said further openings are formed as nozzles for creating liquid jets in a direction inclined with respect to the vertical direction. Such nozzles can direct the heated water to any location that has to be rinsed or can direct the heated water to special areas to increase the turbulence of the liquid.

In one preferred embodiment, the device comprises means for increasing the supply of heated water to the brewing chamber to a higher level than required during brewing of a beverage by means of a pad in the brewing chamber. The pressure as well as the flow is temporarily increased in this case, in particular through an increase in the power of the water pump. The increased water supply results in an improved rinsing effect and more turbulence in the beverage receiving means.

In one preferred embodiment, said lower part comprises an additional chamber located underneath the brewing chamber such that said further openings connect said additional chamber with said beverage receiving means, and the connection between the brewing chamber and said additional chamber can be closed during the brewing process. The central part of the lower wall of the brewing chamber can thus move in vertical direction, so that an annular opening between the brewing chamber and said additional chamber is present around said central part in the upper position thereof, and said annular opening is closed in the lower position. This preferred design will be further elucidated when an example of an embodiment is described.

In one preferred embodiment, the beverage receiving means comprise a foam chamber, also called a frothing chamber, for creating foam (or froth) in the beverage, said further openings being formed as nozzles for directing liquid jets to different parts of the wall of said foam chamber.

The invention also relates to a method of cleaning a beverage making device comprising a brewing chamber for enclosing a pad containing a substance from which the beverage is to be brewed, which brewing chamber is formed by an upper part with one or more openings for supplying water to the brewing chamber and by a lower part with an outflow opening through which the brewed beverage can leave the brewing chamber, while beverage receiving means are present below said lower part, one or more further openings are present between the brewing chamber and the beverage receiving means, and said one or more further openings are closed during the brewing process and are opened during a cleaning process.

Furthermore, the beverage making device according to the invention can be used for brewing a beverage from a substance soluble in water, which substance is present in said beverage receiving means, while no pad is present in the brewing chamber.

The invention will now be explained by means of a description of an embodiment of a device for making coffee with reference to the drawing comprising five Figures, in which:
Fig. 1 is a front view of the coffee making device;
Fig. 2 is a sectional view along the line II-II in Fig. 1 with the hinging part in closed position;
Fig. 3 is a similar view as shown in Fig. 2;
Fig. 4 shows the lower part of the brewing chamber; and
Fig. 5 shows the same lower part without a pad.

The Figures are very schematic representations, showing only relevant portions of the device. The coffee making device according to the described embodiment comprises a stationary part 1 and a hinging part or lid 2. The stationary part 1 comprises the lower part 8 of the brewing chamber, i.e. the removable part that comprises the lower wall of the brewing chamber. The hinging part 2 includes the upper part of the brewing chamber comprising the upper wall 4 of the brewing chamber. The stationary part 1 furthermore comprises a water container and means for heating the water and pumping a predetermined quantity of the heated water through the hinging part 2 to the five holes 5 in the upper wall 4 of the brewing chamber. Said water container and said means are not shown in the Figures.

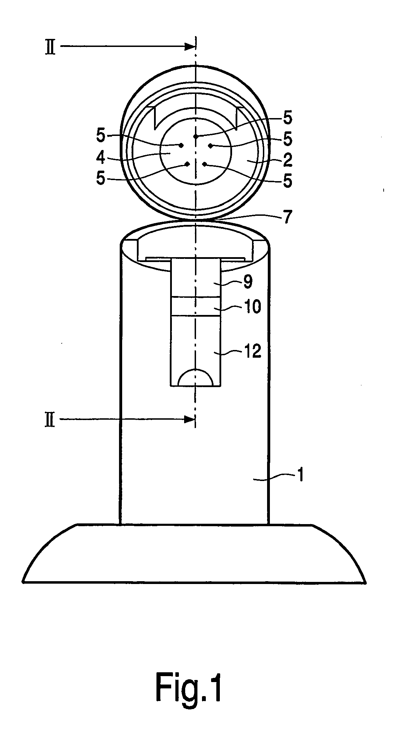

Figure 1 is a front view of the device for making coffee, showing the stationary part 1 and the hinging part, or lid 2. The lid 2 is represented in the open position, i.e. the position in which the brewing chamber is accessible, for example for replacing the pad 6. The upper wall 4 of the brewing chamber is in a substantial vertical position then.

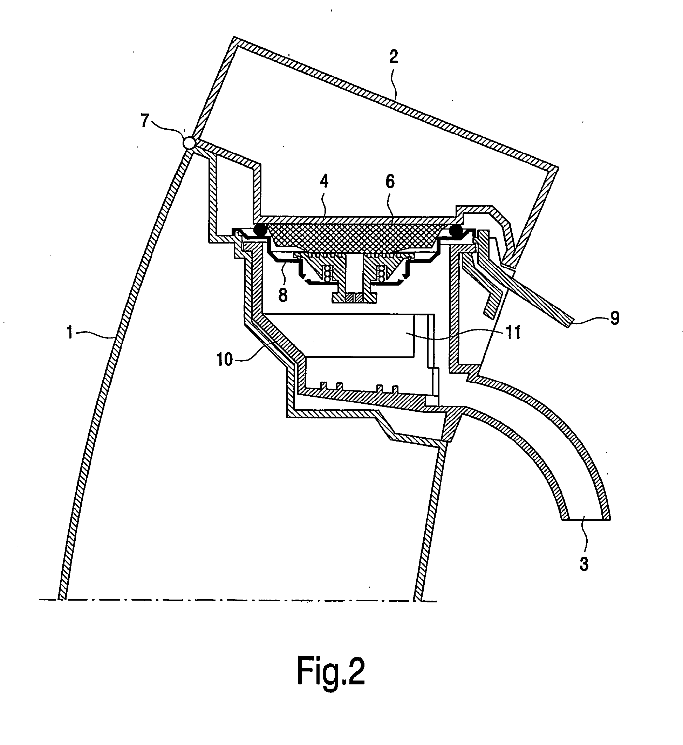

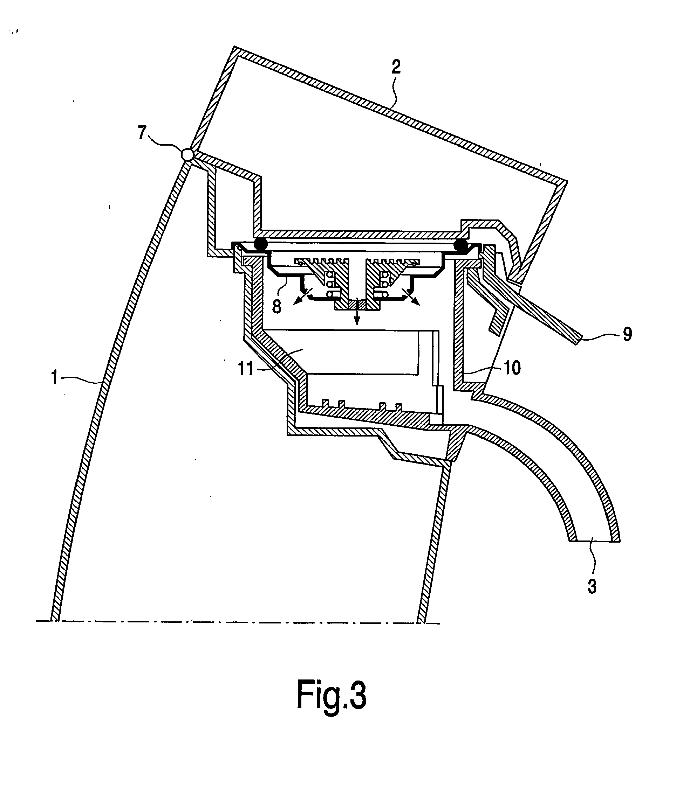

Figures 2 and 3 are sectional views of the uppermost portion of the device with the lid 2 in closed position. Lid 2 can hinge about horizontal axis 7 to move between the open position and the closed position. Figure 2 shows the device having a pad 6 in the brewing chamber, and Figure 3 shows the device without a pad 6.

The device furthermore comprises the lower part 8 of the brewing chamber, which lower part 8 is removable from the device. It carries a handle 9 to facilitate the removal. A second removable part 10 is located below said lower part 8, which part 10 comprises a beverage receiving chamber 11 and an outflow tube 3 extending outside the device.

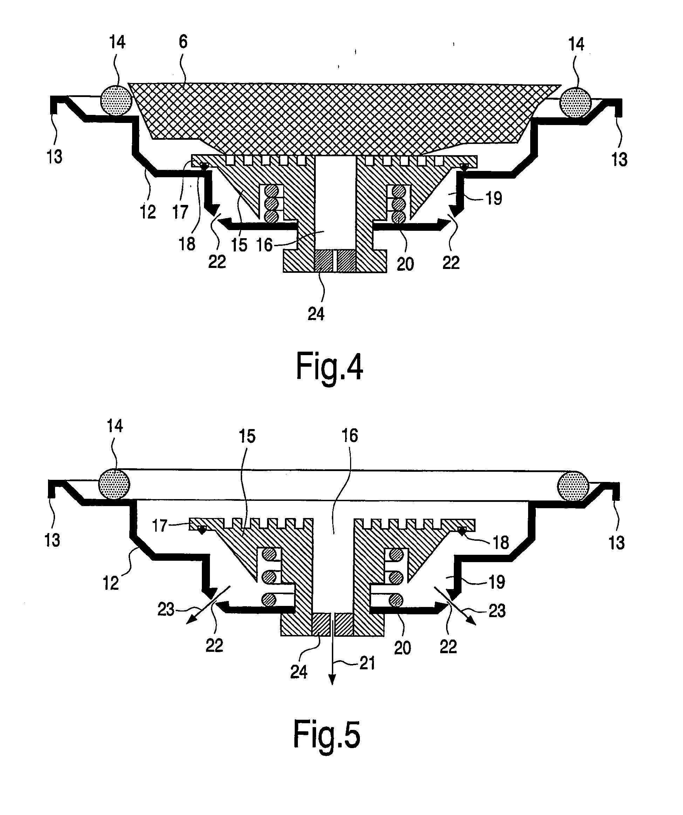

Figures 4 and 5 are schematic sectional views of said lower part 8. In Figure 4, a pad 6 is present on said lower part 8 and Figure 5 shows the lower part 8 without the pad 6. The disc-like pad 6 is a container made of filtering paper enclosing the substance, in this example coffee, from which the beverage is to be brewed.

Lower part 8, shown in Figures 4 and 5, comprises a metal part 12 having a circular edge 13, which edge 13 can rest on a corresponding circular edge of the stationary part 1 of the device. A circular sealing ring 14 is attached to part 12. The sealing ring 14 abuts against the upper wall 4 when the brewing chamber is closed (see Figures 2 and 3), so that the brewing chamber is closed at its circumferential edge.

As is shown in Figure 4, metal part 12 forms an annular part of the lower wall of the brewing chamber. The central part of the lower wall of the brewing chamber is formed by a synthetic resin element 15, comprising the outflow opening 16 for the brewed beverage. The upper side of the element 15 is provided with protrusions to support the pad 6, so that the brewed beverage can flow between the protrusions to the outflow opening 16. Element 15 can move in vertical direction with respect to the part 12.

Figure 4 shows the element 15 in the lower position, in which the circular edge 17 of element 15 rests on part 12 through a sealing ring 18. An annular additional chamber 19 underneath the brewing chamber is separated from the brewing chamber thereby. In that situation the brewed beverage can only leave the brewing chamber through outflow opening 16. Element 15 is pushed down into its lower position by the pad 6, which pad 6 is pushed down by the upper wall 4 of the brewing chamber, in the case in which the brewing chamber is closed, as is shown in Figure 2.

When the brewing chamber is opened, screw spring 20 will push element 15 in upward direction, so that it reaches its upper position, as is shown in Figure 5. In that upper position the pad 6 can be easily removed because it is lifted somewhat. If a new pad is inserted in order to perform the next brewing process, the element 15 will be pushed down again when the brewing chamber is closed. However, if the brewing chamber is closed without a pad in it, then the element 15 will not be pushed down, so that the edge 17 remains at a distance from the part 12, as is shown in Figure 5.

So, when a normal brewing process is initiated without a pad 6 in the brewing chamber, then the heated water will not only leave the brewing chamber through outflow opening 16, as is indicated by arrow 21, but also through annular chamber 19 and through openings 22 in the metal part 12, as is indicated by arrows 23. Each opening 22 can be formed as a nozzle for spouting a jet of water against a surface to rinse that surface intensively. Said surface may be a part of a frothing chamber (foam chamber) located underneath the lower part 8 of the brewing chamber.

Outflow opening 16 may be provided with a flow restricting element 24. Such an element 24 may function as a nozzle to create a jet of the brewed beverage and spout it against a surface to generate foam, for example to make coffee with a foam layer on it. Furthermore, if there is no pad 6 in the brewing chamber and water is flowing through openings 22, such a restricting element 24 can limit the flow through opening 16, so that more water will leave the brewing chamber through openings 22.

The embodiment as described above is merely an example of the beverage making device; a great many other embodiments are possible.

## Claims

1. A beverage making device comprising a brewing chamber for enclosing a pad (6) containing a substance from which the beverage is to be brewed, which brewing chamber is formed by an upper part with one or more openings (5) for supplying water to the brewing chamber and by a lower part (8) with an outflow opening (16) through which the brewed beverage can leave the brewing chamber, while beverage receiving means (10,11) are present below said lower part (8), whereby one or more further openings (22) are present between the brewing chamber and the beverage receiving means (10,11), **characterized by** means for closing said one or more further openings (22) during the brewing process.

2. A beverage making device as claimed in claim 1, **characterized in that** said one or more further openings (22) can be closed **in that** a portion (15) of said lower part (8) is pushed downward, said portion comprising at least a part of the lower wall of the brewing chamber, preferably the central part of the lower wall of the brewing chamber.

3. A beverage making device as claimed in claim 2, **characterized in that** said portion (15) of the lower part (8) is pushed downward by the pad (6) present in the brewing chamber.

4. A beverage making device as claimed in any one of the preceding claims, **characterized in that** the device comprises means for increasing the supply of heated water to the brewing chamber to a higher level than is required during brewing of a beverage by means of a pad (6) in the brewing chamber.

5. A beverage making device as claimed in any one of the preceding claims, **characterized in that** said further openings (22) are formed as nozzles for creating liquid jets in a direction inclined with respect to the vertical direction.

6. A beverage making device as claimed in any one of the preceding claims, **characterized in that** said lower part (8) comprises an additional chamber (19) located underneath the brewing chamber such that said further openings (22) connect said additional chamber (19) with said beverage receiving means (10,11), and the connection between the brewing chamber and said additional chamber (19) can be closed during the brewing process.

7. A beverage making device as claimed in claim 6, **characterized in that** the central part (15) of the lower wall of the brewing chamber can move in vertical direction, such that an annular opening between the brewing chamber and said additional chamber (19) is present around said central part (15) in the upper position thereof, and in the lower position said annular opening is closed.

8. A beverage making device as claimed in any one of the preceding claims, **characterized in that** the beverage receiving means (10,11) comprise a foam chamber for creating foam in the beverage, said further openings (22) being formed as nozzles for directing liquid jets to different parts of the wall of said foam chamber.

9. A method of cleaning a beverage making device comprising a brewing chamber for enclosing a pad (6) containing a substance from which the beverage is to be brewed, which brewing chamber is formed by an upper part with one or more openings (5) for supplying water to the brewing chamber and by a lower part (8) with an outflow opening (16) through which the brewed beverage can leave the brewing chamber, beverage receiving means (10,11) being present below said lower part (8), whereby one or more further openings (22) are present between the brewing chamber and the beverage receiving means (10,11), **characterized in that** said one or more further openings (22) are closed during the brewing process and are opened during a cleaning process.

## Patentansprüche

1. Getränkeherstellungsvorrichtung mit einer Brühkammer zum Einschließen eines Pads (6) mit einer Substanz, aus der das Getränk gebrüht werden soll, wobei diese Brühkammer durch einen oberen Teil mit einer oder mehreren Öffnungen (5) zum Liefern von Wasser zu der Brühkammer, und durch einen unteren Teil (8) mit einer Auslauföffnung (16), durch die das gebrühte Getränk die Brühkammer verlassen kann, gebildet wird, während Getränkempfangsmittel (10, 11) unterhalb des genannten unteren Teils (8) vorgesehen sind, wobei eine oder mehrere weitere Öffnungen (22) zwischen der Brühkammer und den Getränkempfangsmitteln (10, 11) vorgesehen sind, **gekennzeichnet durch** Mittel zum Schließen der genannten einen oder weiteren Öffnungen (22) während des Brühprozesses.

2. Getränkeherstellungsvorrichtung nach Anspruch 1, **dadurch gekennzeichnet, dass** die genannte eine oder die genannten mehreren Öffnungen (22) **dadurch** geschlossen werden können, dass ein Teil (15) des genannten unteren Teils (8) herunter gedrückt wird, wobei der genannte Teil wenigstens einen Teil der unteren Wand der Brühkammer aufweist, vorzugsweise den zentralen Teil der unteren Wand der Brühkammer.

3. Getränkeherstellungsvorrichtung nach Anspruch 2, **dadurch gekennzeichnet, dass** der genannte Teil (15) des unteren Teils (8) durch das in der Brühkammer befindliche Pad (6) herunter gedrückt wird.

4. Getränkeherstellungsvorrichtung nach einem der vorstehenden Ansprüche, **dadurch gekennzeichnet, dass** die Vorrichtung Mittel aufweist zum Steigern der Zulieferung erhitzten Wassers zu der Brühkammer zu einem höheren Pegel als beim Brühen eines Getränkes mit Hilfe eines Pads (6) in der Brühkammer erforderlich ist.

5. Getränkeherstellungsvorrichtung nach einem der Vorstehenden Ansprüche, **dadurch gekennzeichnet, dass** die genannten weiteren Öffnungen (22) als Düsen zum Schaffen von Flüssigkeitsstrahlen in einer Richtung, die gegenüber der vertikalen Richtung schief ist, gebildet sind.

6. Getränkeherstellungsvorrichtung nach einem der vorstehenden Ansprüche, **dadurch gekennzeichnet, dass** der genannte untere Teil (8) eine zusätzliche Kammer (19) aufweist, die sich unterhalb der Brühkammer befindet, und zwar derart, dass die genannten weitem Öffnungen (22) die genannte zusätzliche Kammer (19) mit den genannten Getränkempfangsmitteln (10, 11) verbinden, und die Verbindung zwischen der Brühkammer und der genannten zusätzlichen Kammer (19) während des Brühprozesses geschlossen werden kann.

7. Getränkeherstellungsvorrichtung nach Anspruch 6, **dadurch gekennzeichnet, dass** der zentrale Teil (15) der unteren Wand der Brühkammer in vertikaler Richtung verlagert werden kann, so dass es zwischen der Brühkammer und der genannten zusätzlichen Kammer (19) um den genannten zentralen Teil (15) in der oberen Position davon eine ringförmige Öffnung gibt, und in der unteren Position die genannte ringförmige Öffnung geschlossen ist.

8. Getränkeherstellungsvorrichtung nach einem der vorstehenden Ansprüche, **dadurch gekennzeichnet, dass** die Getränkempfangsmittel (10, 11) eine Schaumkammer zum Schaffen von Schaum in dem Getränk aufweisen, wobei die genannten weiteren Öffnungen (22) als Düsen zum Richten von Flüssigkeitsstrahlen auf verschiedene Teile der Wand der genannten Schaumkammer gebildet sind.

9. Verfahren zum Reinigen einer Getränkeherstellungsvorrichtung mit einer Brühkammer zum Einschließen eines Pads (6) mit einer Substanz, aus der das Getränk gebrüht werden soll, wobei die genannte Brühkammer durch einen oberen Teil mit einer oder mehreren Öffnungen (5) zum Zuführen von Wasser zu der Brühkammer, und durch einen unteren teil (8) mit einer Auslauföffnung (16) gebildet ist, durch die das gebrühte Getränk die Brühkammer verlassen kann, wobei die Getränkempfangsmittel (10, 11) unterhalb des genannten unteren Teils (8) vorgesehen sind, wobei eine oder mehrere weitere Öffnungen (22) zwischen der Brühkammer und den Getränkempfangsmitteln (10, 11) vorgesehen sind, **dadurch gekennzeichnet, dass** die genannte eine oder die genannten mehreren weiteren Öffnungen (22) während des Brühprozesses geschlossen und während eines Reinigungsprozesses geöffnet sind.

## Revendications

1. Dispositif pour fabriquer une boisson comprenant une chambre de brassage pour loger une dosette (6) contenant une substance à partir de laquelle la boisson doit être brassée, ladite chambre de brassage étant formée par une partie supérieure comportant une ou plusieurs ouverture(s) (5) pour introduire de l'eau dans la chambre de brassage, et par une partie inférieure (8) présentant une ouverture de sortie (16) à travers laquelle la boisson brassée peut quitter la chambre de brassage, des moyens de réception de boisson (10, 11) étant disposés en dessous de ladite partie inférieure (8), dans lequel une ou plusieurs ouverture(s) supplémentaire(s) (22) est (sont) formée(s) entre la chambre de brassage et les moyens de réception de boisson (10, 11), **caractérisé par** des moyens de fermeture pour fermer ladite ou lesdites ouverture(s) supplémentaire(s) (22) pendant le procédé de brassage.

2. Dispositif pour fabriquer une boisson selon la revendication 1, **caractérisé en ce que** ladite ou lesdites ouverture(s) supplémentaire(s) (22) peu(ven)t être fermée(s) de telle sorte qu'une partie (15) de ladite partie inférieure (8) soit poussée vers le bas, ladite partie comprenant au moins une partie de la paroi inférieure de la chambre de brassage, de préférence la partie centrale de la paroi inférieure de la chambre de brassage.

3. Dispositif pour fabriquer une boisson selon la revendication 2, **caractérisée en ce que** ladite partie (15) de la partie inférieure (8) est poussée vers le bas par la dosette (6) présente dans la chambre de brassage.

4. Dispositif pour fabriquer une boisson selon l'une quelconque des revendications précédentes, **caractérisé en ce que** le dispositif comprend des moyens pour porter la fourniture d'eau chaude dans la chambre de brassage à un niveau plus élevé que ce qui est nécessaire pendant le brassage d'une boisson au moyen d'une dosette (6) dans la chambre de brassage.

5. Dispositif pour fabriquer une boisson selon l'une quelconque des revendications précédentes, **caractérisé en ce que** lesdites ouvertures supplémentaires (22) se présentent sous la forme de buses pour créer des jets de liquide dans une direction inclinée par rapport à la direction verticale.

6. Dispositif pour fabriquer une boisson selon l'une quelconque des revendications précédentes, **caractérisé en ce que** ladite partie inférieure (8) comprend une chambre supplémentaire (19) située en dessous de la chambre de brassage, de telle sorte que lesdites ouvertures supplémentaires (22) relient ladite chambre supplémentaire (19) auxdits moyens de réception de boisson (10, 11), et la connexion entre la chambre de brassage et ladite chambre supplémentaire (19) peut être fermée pendant le procédé de brassage.

7. Dispositif pour fabriquer une boisson selon la revendication 6, **caractérisé en ce que** la partie centrale (15) de la paroi inférieure de la chambre de brassage peut se déplacer dans une direction verticale, de telle sorte qu'une ouverture annulaire entre la chambre de brassage et ladite chambre supplémentaire (19) soit formée autour de ladite partie centrale (15) dans la position supérieure de celle-ci, et dans la position inférieure, ladite ouverture annulaire est fermée.

8. Dispositif pour fabriquer une boisson selon l'une quelconque des revendications précédentes, **caractérisé en ce que** les moyens de réception de boisson (10, 11) comprennent une chambre de moussage pour former de la mousse dans la boisson, lesdites ouvertures supplémentaires (22) se présentant sous la forme de buses pour diriger des jets de liquide vers différentes parties de la paroi de ladite chambre de moussage.

9. Procédé de nettoyage d'un dispositif pour fabriquer une boisson comprenant une chambre de brassage pour loger une dosette (6) contenant une substance à partir de laquelle la boisson doit être brassée, ladite chambre de brassage étant formée par une partie supérieure comportant une ou plusieurs ouverture(s) (5) pour introduire de l'eau dans la chambre de brassage, et par une partie inférieure (8) présentant une ouverture de sortie (16) à travers laquelle la boisson brassée peut quitter la chambre de brassage, des moyens de réception de boisson (10, 11) étant disposés en dessous de ladite partie inférieure (8), dans lequel une ou plusieurs ouverture(s) supplémentaire(s) (22) est (sont) formée(s) entre la chambre de brassage et les moyens de réception de boisson (10, 11), **caractérisé en ce que** ladite ou lesdites ouverture(s) supplémentaire(s) (22) est (sont) fermée(s) pendant le procédé de brassage, et est (sont) ouverte(s) pendant un procédé de nettoyage.
